# EUROPEAN PATENT APPLICATION

(11) **EP 3 890 313 A1**
(43) Date of publication of application: **06.10.2021**
(21) Application number: 19916221.5
(22) Date of filing: 19.11.2019
(51) Int. Cl.: H04N 7/18, B60R 1/00, E02F 9/24, E02F 9/26, G08B 21/02, G08B 25/00

(54) **PERIPHERY MONITORING DEVICE FOR WORK MACHINE**

(30) Priority: 20.02.2019 JP 2019028324
(71) Applicant: KOBELCO CONSTRUCTION MACHINERY CO., LTD., Hiroshima-shi Hiroshima 731-5161 (JP)
(72) Inventor: SASAKI, Hitoshi, Hiroshima-shi, Hiroshima 731-5161 (JP); YAMAZAKI, Yoichiro, Hiroshima-shi, Hiroshima 731-5161 (JP); SAIKI, Seiji, Hiroshima-shi, Hiroshima 731-5161 (JP)
(74) Representative: Schön, Christoph
(86) International application number: PCT/JP2019/045325
(87) International publication number: WO 2020/170527

(57) **Abstract**

There is provided a device that enables an operator of a work machine to recognize whether or not an object exists in the periphery of the work machine with an appropriate amount of information from the viewpoint of avoiding a reduction in focus of the operator of the work machine. When the state of operation of an operation device 400 performed by an operator is a "first operation state", and an object exists in a target space around a work machine 200, an alarm is output in a "first mode". When the state of operation of the operation device 400 performed by the operator is a "second operation state", and an object exists in the target space around the work machine 200, an alarm is output in a "second mode" in which a larger amount of information is provided than in the "first mode".

## Description

### Technical Field

The present invention relates to a device that monitors the periphery of a work machine.

### Background Art

A technique has been proposed in which in order to allow an operator of a work machine to intuitively identify the position of a person existing around the work machine, when a person is determined to exist in one monitoring space (for example, a space right beside the work machine), an alarm is output from one alarm output unit (for example, a right alarm output unit in a cab) corresponding to the one monitoring space, and when a person is determined to exist in another monitoring space (for example, a space behind the work machine), an alarm is output from another alarm output unit (for example, a rear alarm output unit in the cab) corresponding to the another monitoring space (for example, refer to Patent Literature 1).

### Citation List

### Patent Literature

Patent Literature 1: Japanese Patent Application Laid-Open No. 2018-093501

### Summary of Invention

### Technical Problem

However, when the amount of alarm information is too large, the large amount of alarm information may lead to a reduction in focus of the operator of the work machine on alarms and the distraction of attention to the alarms.

Therefore, an object of the present invention is to provide a device that enables an operator of a work machine to recognize whether or not an object is present in the periphery of the work machine with an appropriate amount of information from the viewpoint of avoiding a reduction in focus of the operator of the work machine.

### Solution to Problem

According to one aspect of the present invention, there is provided a periphery monitoring device for a work machine including: a first detection element configured to detect a state of operation of an operation device performed by an operator to operate a work machine; a second detection element configured to detect whether or not an object exists in a target space around the work machine; a plurality of output devices that is disposed in an operation space of the work machine to output an alarm to the operator; and a control element configured to cause the output device to output an alarm in a first mode when the first detection element detects a first operation state as the state of operation of the operation device and the second detection element detects that the object exists in the target space, and cause the output device to output an alarm in a second mode, in which a larger amount of information is provided than in the first mode, when the first detection element detects a second operation state, which is different from the first operation state, as the state of operation of the operation device and the second detection element detects that the object exists in the target space.

### Brief Description of Drawings

FIG. 1 is a block diagram describing a configuration of a periphery monitoring device for a work machine as one embodiment of the present invention.
FIG. 2 is a side view of a crawler excavator as a work machine.
FIG. 3 is a top view of the crawler excavator as the work machine.
FIG. 4 is a view describing an internal space of a cab.
FIG. 5 is a view describing target spaces.
FIG. 6 is a flowchart describing the function of the periphery monitoring device for a work machine.
FIG. 7A is a view describing a plurality of annular spaces of a first embodiment.
FIG. 7B is a view describing a plurality of annular spaces of a second embodiment.

### Description of Embodiments

### (Configuration)

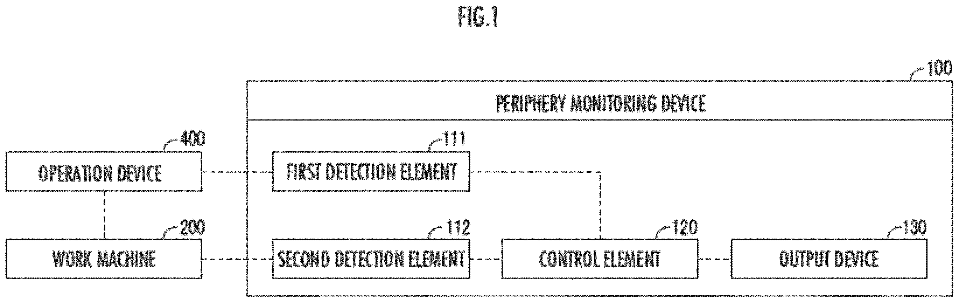

A periphery monitoring device 100 for a work machine as one embodiment of the present invention illustrated in FIG. 1 is configured to monitor a situation of the periphery of a work machine 200, and output an alarm to an operator, who operates the work machine 200 through an operation device 400, according to the situation. The periphery monitoring device 100 for a work machine includes a first detection element 111, a second detection element 112, a control element 120, and a plurality of output devices 130.

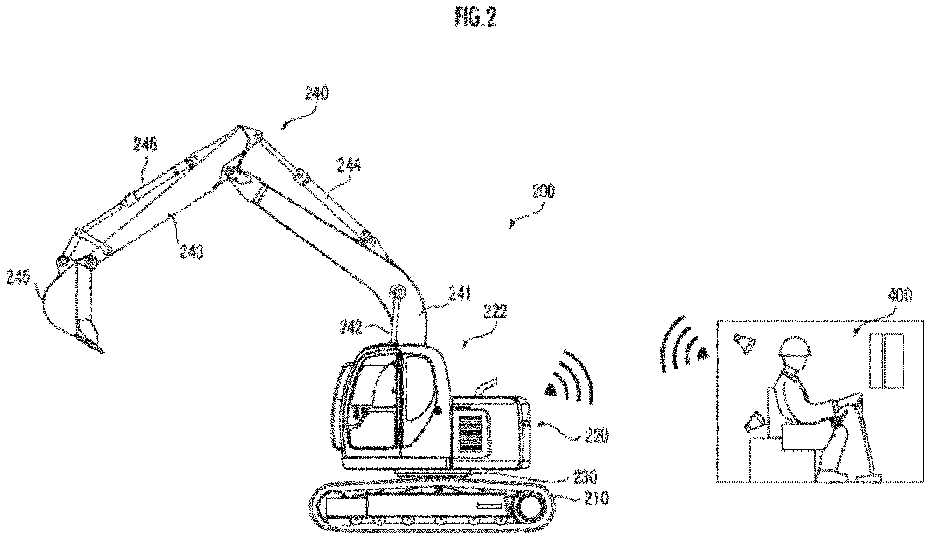

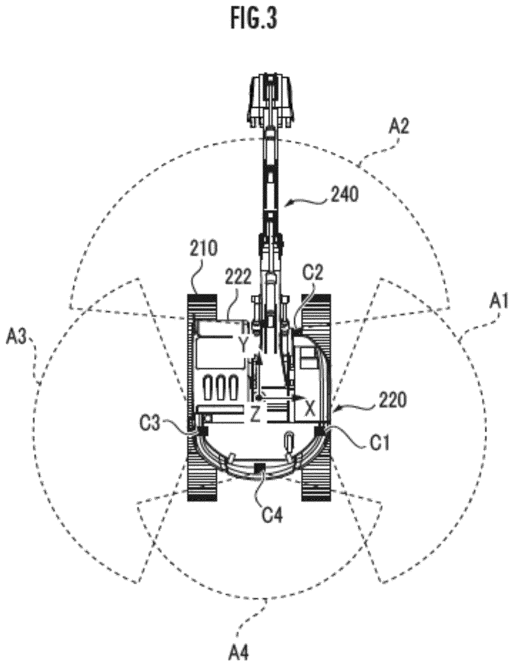

The work machine 200 is, for example, a crawler excavator (construction machine), and as illustrated in FIGs. 2 and 3, includes a lower traveling body 210 of a crawler type and an upper turning body 220 that is mounted on the lower traveling body 210 so as to be turnable via a turning mechanism 230. A cab (operation room) 222 is provided in a front left portion of the upper turning body 220. A work attachment 240 is provided in a front central portion of the upper turning body 220.

The work attachment 240 includes a boom 241 that is derrickably mounted on the upper turning body 220, an arm 243 that is rotatably connected to a tip of the boom 241, and a bucket 245 that is rotatably connected to a tip of the arm 243. A boom cylinder 242, an arm cylinder 244, and a bucket cylinder 246 which includes respective expandable hydraulic cylinders are mounted in the work attachment 240.

The boom cylinder 242 intervenes between the boom 241 and the upper turning body 220 such that the boom cylinder 242 receives the supply of a hydraulic oil to expand and thus rotates the boom 241 in a derricking direction. The arm cylinder 244 intervenes between the arm 243 and the boom 241 such that the arm cylinder 244 receives the supply of the hydraulic oil to expand and thus rotates the arm 243 around a horizontal axis with respect to the boom 241. The bucket cylinder 246 intervenes between the bucket 245 and the arm 243 such that the bucket cylinder 246 receives the supply of the hydraulic oil to expand and thus rotates the bucket 245 around the horizontal axis with respect to the arm 243.

The operation device 400 includes a traveling operation device, a turning operation device, a boom operation device, an arm operation device, and a bucket operation device. Each operation device includes an operation lever that receives a rotation operation. The operation lever (traveling lever) of the traveling operation device is operated to cause the lower traveling body 210 to operate. The traveling lever may also serve as a traveling pedal. For example, the traveling pedal may be provided in such a way as to be fixed to a base portion or a lower end portion of the traveling lever. The operation lever (turning lever) of the turning operation device is operated to cause a hydraulic turning motor, which forms the turning mechanism 230, to operate. The operation lever (boom lever) of the boom operation device is operated to cause the boom cylinder 242 to operate. The operation lever (arm lever) of the arm operation device is operated to cause the arm cylinder 244 to operate. The operation lever (bucket lever) of the bucket operation device is operated to cause the bucket cylinder 246 to operate. The operation device 400 includes a wireless communication device that wirelessly communicates with an actual machine side wireless communication device mounted in the work machine 200.

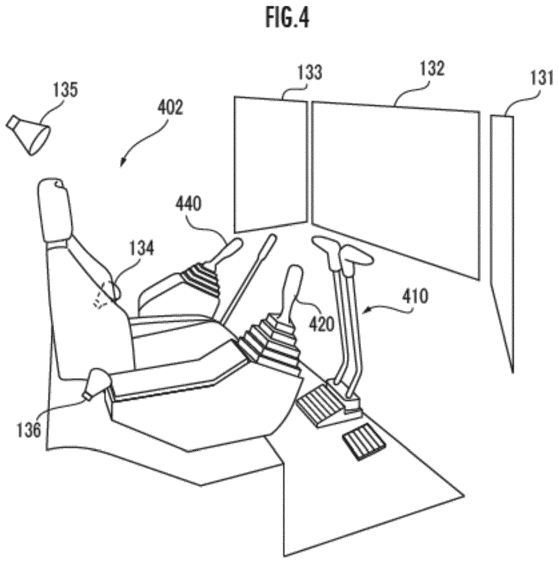

The operation levers forming the operation device 400 are provided around a seat 402 in which an operator sits in a remote operation room. For example, as illustrated in FIG. 4, a pair of right and left traveling levers 410 corresponding to right and left crawlers may be disposed laterally side by side in front of the seat 402. The seat 402 is in the form of a high back chair with armrests, but may be in any form such as the form of a low back chair without a headrest or the form of a chair without a backrest in which an operator can sit.

The cab 222 is provided with actual machine side operation levers corresponding to the operation levers provided in the remote operation room, and a drive mechanism or a robot that receives a signal corresponding to an operation mode of each operation lever from the remote operation room to operate the actual machine side operation levers based on the received signal. The actual machine side operation levers may be directly operated by an operator existing in the cab 222. Namely, the operation device 400 includes the actual machine side operation lever and a remote control valve that outputs a pilot pressure having a magnitude corresponding to the operation amount of the actual machine side operation lever from a port corresponding to an operation direction. In this case, the operation device 400 may be configured to be able to communicate with the work machine 200 in a wired manner instead of a wireless manner.

One operation levers may also serve as a plurality of operation levers. For example, a right operation lever 420 provided in front of a right frame of the seat 402 illustrated in FIG. 4 may function as the boom lever when being operated in a front-rear direction, and function as the bucket lever when being operated in a right-left direction. Similarly, a left operation lever 440 provided in front of a left frame of the seat 402 illustrated in FIG. 4 may function as the arm lever when being operated in the front-rear direction, and function as the turning lever when being operated in the right-left direction. The lever pattern may be randomly changed according to an operation instruction of an operator.

The first detection element 111 detects the state of operation of the operation device 400 performed by an operator to operate the work machine 200. For example, the first detection element 111 includes a sensor that outputs a signal corresponding to the deformation amount or the displacement amount of a biasing mechanism including a spring or an elastic member that acts to return the operation lever to the original position and posture corresponding to an operation amount of 0, and an arithmetic processing unit that estimates whether or not the boom, the arm, the bucket, and the like are operated, in addition to estimating whether or not the turning lever is operated based on the output signal of the sensor to cause the upper turning body 220 to turn counterclockwise at a speed when viewed from above.

The first detection element 111 may include a pilot pressure sensor that outputs a signal corresponding to a pilot pressure corresponding to the operation amount of each actual machine side operation lever, and an arithmetic processing unit that estimates whether or not the boom, the arm, the bucket, and the like are operated, in addition to estimating whether or not the turning lever is operated based on the output signal of the pilot pressure sensor to cause the upper turning body 220 to turn counterclockwise at a speed when viewed from above.

The second detection element 112 detects the position of an object existing around the work machine 200. The second detection element 112 includes a right sensor C1, a front sensor C2, a left sensor C3, and a rear sensor C4 that are disposed on right, front, left, and rear sides of the upper turning body 220, respectively, and an arithmetic processing unit that specifies the real spatial position of an object in a work machine coordinate system (X, Y, Z) (refer to FIG. 3), of which the position and the posture are fixed with respect to the upper turning body 220, based on output signals from the sensors C1 to C4. Each of the sensors C1 to C4 includes, for example, a TOF type distance image sensor. Each of the sensors C1 to C4 may include an imaging device such as a CCD camera capable of sensing an image having physical quantities such as luminance and color other than distance as pixel values, in addition to the distance image sensor.

The three-dimensional position of an object existing at a pixel position in each sensor coordinate system is determined based on the pixel position and a pixel value (distance) in a three-dimensional distance image obtained by each of the sensors C1 to C4. The three-dimensional position of the object in the work machine coordinate system is obtained according to a coordinate transformation operator (rotation matrix or quaternion), which represents the position and the posture of each of the sensors C1 to C4 in the work machine coordinate system, based on the three-dimensional position of the object in each sensor coordinate system.

The sensors C1 to C4 acquire distance images of objects existing in a right detection target space A1, a front detection target space A2, a left detection target space A3, and a rear detection target space A4 illustrated in FIG. 3 which each have the shape of a substantially fan-shaped column and spread on the right, front, left, and rear sides of the upper turning body 220, respectively. Each of the right detection target space A1 and the left detection target space A3 desirably overlaps the front detection target space A2 and the rear detection target space A4 in part, but may not overlap the front detection target space A2 and the rear detection target space A4.

For example, when the upper turning body 220 turns counterclockwise around a Z-axis, the upper turning body 220 has a high possibility of coming into contact with objects existing in spaces that are diagonally left in front of and diagonally right behind the upper turning body 220 (refer to FIG. 8A). When the upper turning body 220 turns clockwise around the Z-axis, the upper turning body 220 has a high possibility of coming into contact with objects existing in spaces that are diagonally right in front of and diagonally left behind the upper turning body 220 (refer to FIG. 8B). When the work machine 200 moves rearward, the work machine 200 has a high possibility of coming into contact with an object existing in a space behind the work machine 200 (refer to FIG. 8C).

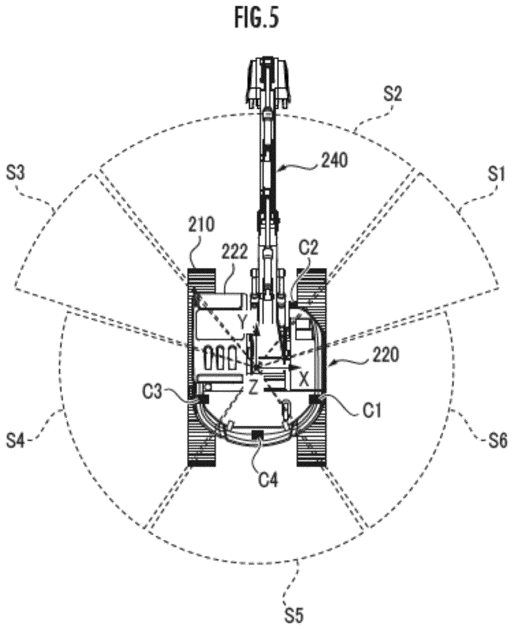

In view of the above possibilities, in the present embodiment, as illustrated in FIG. 5, a diagonally right front target space S1, a front target space S2, a diagonally left front target space S3, a diagonally left rear target space S4, a rear target space S5, and a diagonally right rear target space S6 which each have the shape of a substantially fan-shaped column and spread with reference to a diagonally right side in front of, a side in front of, a diagonally left side in front of, a diagonally left side behind, a side behind, and a diagonally right side behind the upper turning body 220 are defined as "a plurality of target spaces". A storage device stores an extension mode of each of the target spaces S1 to S6 in the work machine coordinate system (X, Y, Z) (equation representing one or a plurality of boundary surfaces (planes or curved surfaces)). Each of upper and lower surfaces of the substantially fan-shaped column corresponding to each space may be a horizontal surface (flat surface parallel to an X-Y plane) or an inclined surface. The Z-coordinate values of the centers of gravity of upper and lower surfaces of the substantially fan-shaped columns corresponding to the spaces may be the same or different from each other.

A diagonally right front output device 131, a front output device 132, a diagonally left front output device 133, a diagonally left rear output device 134, a rear output device 135, and a diagonally right rear output device 136 are disposed on a diagonally right front side, a front side, a diagonally left front side, a diagonally left rear side, a rear side, and a diagonally right rear side with reference to a sitting portion of the seat 402 (place where an operator stays), respectively, in which the operator sits in the remote operation room (or the internal space of the cab 222) which is an operation space of the work machine 200, such that the plurality of output devices 130 corresponds to the directions of a plurality of the respective target spaces S1 to S6 with reference to the work machine 200. The output devices 131 to 133 each include, for example, an image output device such as a display and an audio output device such as a speaker, and output an alarm to the operator by image and audio. The output devices 134 to 136 each include, for example, an audio output device such as a speaker, and output an alarm to the operator by audio.

When the first detection element 111 detects a first operation state as the state of operation of the operation device 400, and the second detection element 112 detects that an object exists in any of the target spaces A1 to A4, the control element 120 causes the output device 130 to output an alarm in a first mode. When the first detection element 111 detects a second operation state different from the first operation state, as the state of operation of the operation device 400, and the second detection element 112 detects that an object exists in any of the target spaces A1 to A4, the control element 120 causes the output device 130 to output an alarm in a second mode in which a larger amount of information is provided than in the first mode.

The control element 120 includes an arithmetic processing unit (a single-core processor, a multi-core processor, or a processor core forming the same), and reads out necessary data and software from a storage device such as a memory, and executes arithmetic processing on the data as a target according to the software to output the result of the arithmetic processing.

### (Function)

The function of the periphery monitoring device 100 for a work machine having the above configuration will be described.

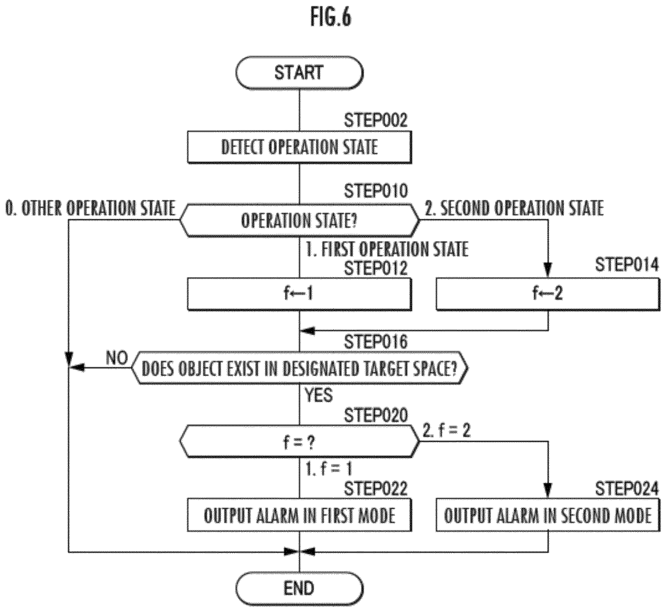

The first detection element 111 detects the state of operation of the operation device 400 performed by an operator to operate the work machine 200 (FIG. 6/STEP 002).

The control element 120 determines which of the "first operation state", "the second operation state", and "other operation state" is the operation state detected by the first detection element 111 (FIG. 6/STEP 010). For example, a state in which a first operation lever (for example, at least one lever of the bucket lever and the arm lever) among four operation levers (the boom lever, the bucket lever, the arm lever, and the turning lever) is operated corresponds to the "first operation state". In addition, a state in which a second operation lever (for example, at least one lever of the turning lever and the boom lever) among the four operation levers is operated corresponds to the "second operation state". When an operation lever exists which does not correspond to both the first operation lever and the second operation lever, a state in which the operation lever is operated corresponds to the "other operation state".

When the operation state detected by the first detection element 111 is determined to be the "first operation state" (FIG. 6/STEP 010 ·· 1), a flag f indicating the operation state is set to "1" (FIG. 6/STEP 012). When the operation state detected by the first detection element 111 is determined to be the "second operation state" (FIG. 6/STEP 010 ·· 2), the flag f indicating the operation state is set to "2" (FIG. 6/STEP 014). When the operation state detected by the first detection element 111 is determined to be the "other operation state", a series of processes in the current control cycle end.

When the flag f is set to "1" or "2", the control element 120 determines whether or not the target space includes the position of the object detected by the second detection element 112 (FIG. 6/STEP 016).

When the position of the object is determined to be not included in the target space (FIG. 6/STEP 016 ·· NO), a series of processes in the current control cycle end. When the position of the object is determined to be included in the target space (FIG. 6/STEP 016 ·· YES), the control element 120 determines whether the flag f is 1 or 2 (FIG. 6/STEP 020).

When the flag f is 1 (FIG. 6/STEP 020 ·· 1), the control element 120 causes the plurality of output devices 130 to output alarms in the first mode (FIG. 6/STEP 022). A bird's-eye view of the work machine 200, the target space, and the object existing in the target space is displayed on the image output devices such as displays forming the output devices 131 to 133 as an "output of the first mode" At least one of the object and the target space including the position of the object may be highlighted by color or the like such that the at least one can be easily distinguished from other images.

When the flag f is 2 (FIG. 6/STEP 020 ·· 2), the control element 120 causes the plurality of output devices 130 to output alarms in the second mode (FIG. 6/STEP 024). In addition to the displaying of a bird's-eye view of the work machine 200, the target space, and the object existing in the target space on the image output devices such as displays forming the output devices 131 to 133, a sound or an audio message indicating that the object exists is output from the audio output devices forming the output devices 131 to 136 as an "output of the second mode" An alarm such as audio may be selectively output from an output device (designated output device) among the output devices 131 to 136, which is disposed in the operation space in a direction corresponding to the target space in which the object exists in the real space.

### (Effects)

According to the periphery monitoring device for a work machine of the present invention, when the state of operation of the operation device 400 performed by an operator is the "first operation state", and an object exists in a target space around the work machine 200, an alarm is output in the first mode (FIG. 6/STEP 010 ·· 1 → ·· → STEP 016 ·· YES → ·· → STEP 022). When the state of operation of the operation device 400 performed by the operator is the "second operation state", and an object exists in a target space around the work machine 200, an alarm is output in the second mode in which a larger amount of information is provided than in the first mode (FIG. 6/STEP 010 ·· 2 → ·· - STEP 016 ·· YES → ·· → STEP 024).

Accordingly, while avoiding or suppressing a reduction in focus of the operator of the work machine 200 by the amount of a reduction in amount of alarm information when the state of operation of the operation device 400 performed by the operator is the "first operation state" as compared to the amount of alarm information when the state of operation of the operation device 400 performed by the operator is the "second operation state", it is possible to cause the operator of the work machine 200 to recognize whether or not an object exists in the periphery of the work machine 200.

### (Other Embodiments of Present Invention)

In STEP 002, the operation state may be determined by determining the work mode of the work machine 200.

When the work machine 200 performs work such as excavating, loading, leveling, or turning, if the machine speed of the work machine 200 is high, it is not preferable that the degree of attention is lowered. On the other hand, when the movement speed of the work machine 200 is low, an emergency can be dealt with sufficiently even if the degree of attention is lowered. For example, since the work machine 200 operates relatively slowly in the work of loading the work machine 200 on a trailer, in the work of exchanging the bucket of the work machine 200, in the parking state of the work machine 200, or the like, it may be enough to output an alarm in the first mode instead of outputting an alarm in the second mode. In such a case, whether or not the operation state is the "first operation state" can be detected by detecting the work state.

In STEP 002, the determination of the operation state may include the determination of a repeated operation. For example, when the work of loading excavated earth and sand into a dump truck or the like is repeated, an alarm for an obstacle or the like in the periphery is output each time. Since an operator has already recognized an obstacle and the like in the vicinity when repeatedly performing work, it may be enough to output an alarm in the first mode. Therefore, when the repeated operation is determined as an operation state, the operation state can be detected as the "first operation state". In this case, a function may be installed by which whether to change the mode of an alarm from the second mode to the first mode can be selected when the repeated operation is detected. In a configuration in which for example, "The same object has been continuously detected. Does the detection want to be cancelled?" can be displayed on a display device or the like in the operation room of the work machine 200, and which of "Yes" and "No" an operator can be asked to select to change the mode of an alarm from the second mode to the first mode, when the operator can recognize what obstacle exists, the operator can select "Yes" to change the mode of an alarm to the first mode, or the operator can select "No" to maintain the second mode of an alarm. In addition, when a new obstacle is detected during repeated work, an alarm may be output in the second mode.

The alarm may differ depending on the detected object. The tone of an alarm sound may be changed depending on the nature of an object, for example, footsteps if the object is a person, an engine sound if the object is a truck, or a wall hitting sound if the object is a wall.

The control element 120 may cause the output device 130 to output an alarm in the second mode, in which a larger amount of information is provided than in the first mode, according to the object detected by the second detection element 112. According to the periphery monitoring device for a work machine having the configuration, an alarm for an object to which attention wants to be paid can be reliably output by outputting an alarm in the second mode, in which a large amount of information is provided, according to the object.

The alarm may be changed according to a change in status of the detected object. For example, in a case where the object is a moving object such as a truck, when the moving object is stopped, an alarm is output in the first mode, and when the moving object moves, the mode of an alarm can be changed to the second mode to raise the degree of attention.

Even if the position of an object is determined to be included in the target space (FIG. 6/STEP 016 ·· YES), and the flag f is 1 (FIG. 6/STEP 020 ·· 1), when the detected object is a person, an alarm may be output in the second mode.

In this case, the work machine 200 includes means for detecting a person (example: a device that extracts a feature quantity from a camera image to detect a person) in addition to means for detecting an object. An alarm related to information about particularly a person for which the degree of attention wants to be raised can be output in the second mode, in which a large amount of information is provided, by causing the device to act as described above.

In the embodiment, the flow is such that when the determination in STEP 010 is the other operation state, an alarm is not output; however, an alarm may be output in the first or second mode.

Each of a plurality of annular spaces which surrounds a reference point or a reference axis of the work machine 200 in a multi-fold manner may be defined to overlap any of the plurality of target spaces, and the output mode of an alarm to be output from the output device 130 may be controlled such that among the plurality of annular spaces, the closer an annular space in which an object exists is to the reference point, the higher the level (ease to recognize or the level of calling attention) of the alarm is.

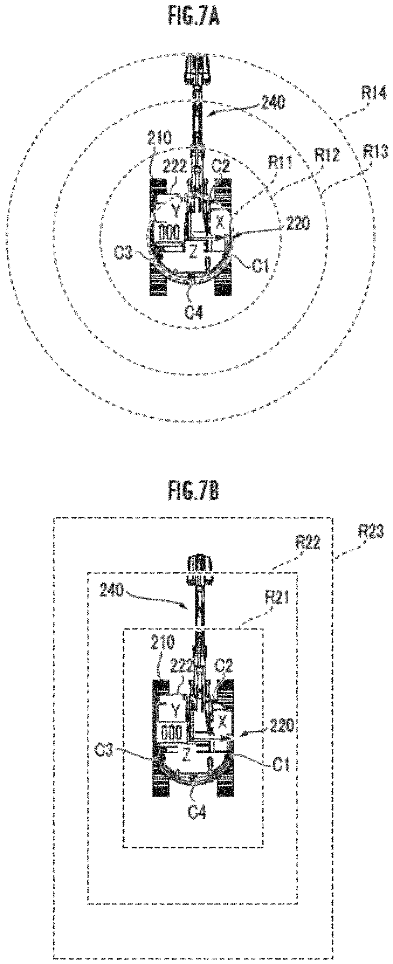

As illustrated in FIG. 7A, a plurality of annular regions R11 to R14 may be defined which have concentric circular ring shapes and have a turning axis of the upper turning body 220 with respect to the lower traveling body 210 as a reference point. As illustrated in FIG. 7B, a plurality of annular regions R21 to R23 may be defined which have concentric rectangular ring shapes and have the turning axis of the upper turning body 220 with respect to the lower traveling body 210 as the reference point. A plurality of annular regions may be defined which have, as a reference point, the sitting portion of the seat 402 (place where an operator stays) in which the operator sits in the remote operation room (or the internal space of the cab 222) that is the operation space of the work machine 200.

For example, the output mode of an alarm may be controlled such that even if the mode of a change in relative position of an object with respect to the work machine determined by time series of the position of the object is the same, the output level of the alarm is higher when the position of the object is included in the annular region R13 than when the position of the object is included in the annular region R14.

### Description of Reference Numerals

- 100:: periphery monitoring device for work machine
- 111:: first detection element
- 112:: second detection element
- 120:: control element
- 130:: output device
- 131:: diagonally right front output device
- 132:: front output device
- 133:: diagonally left front output device
- 134:: diagonally left rear output device
- 135:: rear output device
- 136:: diagonally right rear output device
- 200:: work machine
- 400:: operation device
- 402:: seat (place where operator stays)
- A1:: right detection target space
- A2:: front detection target space
- A3:: left detection target space
- A4:: rear detection target space
- C1:: right sensor
- C2:: front sensor
- C3:: left sensor
- C4:: rear sensor
- S1:: diagonally right front target space
- S2:: front target space
- S3:: diagonally left front target space
- S4:: diagonally left rear target space
- S5:: rear target space
- S6:: diagonally right rear target space

## Claims

1. A periphery monitoring device for a work machine comprising:
a first detection element configured to detect a state of operation of an operation device performed by an operator to operate a work machine;
a second detection element configured to detect whether or not an object exists in a target space around the work machine;
a plurality of output devices that is disposed in an operation space of the work machine to output an alarm to the operator; and
a control element configured to cause the output device to output an alarm in a first mode when the first detection element detects a first operation state as the state of operation of the operation device and the second detection element detects that the object exists in the target space, and cause the output device to output an alarm in a second mode, in which a larger amount of information is provided than in the first mode, when the first detection element detects a second operation state, which is different from the first operation state, as the state of operation of the operation device and the second detection element detects that the object exists in the target space.

2. The periphery monitoring device for a work machine according to claim 1,
wherein the first operation state is detected according to a work mode of the work machine.

3. The periphery monitoring device for a work machine according to claim 1 or 2,
wherein the first operation state includes a state in which a repeated work operation of the operation device is detected.

4. The periphery monitoring device for a work machine according to any one of claims 1 to 3,
wherein the control element causes the output device to output an alarm in the second mode, in which a larger amount of information is provided than in the first mode, according to the object detected by the second detection element.

5. The periphery monitoring device for a work machine according to any one of claims 1 to 4,
wherein when the object detected by the second detection element is a person, the control element causes the output device to output an alarm in the second mode in which a larger amount of information is provided than in the first mode.
